# EUROPEAN PATENT SPECIFICATION

(11) **EP 2 885 345 B1**
(45) Date of publication and mention of the grant of the patent: **25.05.2016**
(21) Application number: 13753385.7
(22) Date of filing: 15.08.2013
(51) Int. Cl.: C08J 9/14, C09K 5/04

(54) **AZEOTROPIC AND AZEOTROPE-LIKE COMPOSITIONS OF 2,3,3,4,4,4-HEXAFLUORO-1-BUTENE AND 1,1,1,2,3,3-HEXAFLUOROPROPANE AND USES THEREOF**
AZEOTROPE UND AZEOTROPENÄHNLICHE ZUSAMMENSETZUNGEN AUS 2,3,3,4,4,4-HEXAFLUOR-1-BUTEN UND 1,1,1,2,3,3-HEXAFLUORPROPAN UND VERWENDUNGEN DAVON
COMPOSITIONS AZÉOTROPIQUES ET DE TYPE AZÉOTROPE DE 2,3,3,4,4,4-HEXAFLUORO-1-BUTÈNE ET DE 1,1,1,2,3,3-HEXAFLUOROPROPANE ET LEURS UTILISATIONS

(30) Priority: 15.08.2012 US 201261683585 P; 15.08.2012 US 201261683589 P
(43) Date of publication of application: 24.06.2015
(73) Proprietor: E. I. du Pont de Nemours and Company, Wilmington, DE 19898 (US)
(72) Inventor: ROBIN, Mark, L., Middletown, Delaware 19709 (US); KONTOMARIS, Konstantinos, Wilmington, Delaware 19808 (US)
(74) Representative: Matthews, Derek Peter
(86) International application number: PCT/US2013/055070
(87) International publication number: WO 2014/028697

(56) References cited:
- WO-A2-2008/076272
- WO-A2-2008/134061
- US-A1- 2006 266 975
- US-A1- 2008 051 612

## Description

### BACKGROUND OF THE INVENTION

### Field of the Disclosure

The present disclosure relates to azeotropic and azeotrope-like compositions of 2,3,3,4,4,4-hexafluoro-1-butene (CF₃CF₂CF=CH₂; HFO-1336yf) and a second component, for example 1,1,1,2,3,3-hexafluoropropane (CF₃CHFCF₂H; HFC-236ea) or Z-1,1,1,4,4,4-hexafluoro-2-butene (cis-1,1,1,4,4,4-hexafluoro-2-butene, Z-CF₃CH=CHCF₃, cis-CF₃CH=CHCF₃, Z-HFO-1336mzz, cis-HFO-1336mzz).

### Description of Related Art

Many industries have been working for the past few decades to find replacements for the ozone depleting chlorofluorocarbons (CFCs) and hydrochlorofluorocarbons (HCFCs). The CFCs and HCFCs have been employed in a wide range of applications, including their use as aerosol propellants, refrigerants, cleaning agents, expansion agents for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents. In the search for replacements for these versatile compounds, many industries have turned to the use of hydrofluorocarbons (HFCs).

The HFCs do not contribute to the destruction of stratospheric ozone, but are of concern due to their contribution to the "greenhouse effect", i.e., they contribute to global warming. As a result of their contribution to global warming, the HFCs have come under scrutiny, and their widespread use may also be limited in the future. Thus, there is a need for compositions that do not contribute to the destruction of stratospheric ozone and also have low global warming potentials (GWPs).

US 2008/051612 describes a process for separating a fluoroolefin from a mixture comprising hydrogen fluoride and fluoroolefin, comprising azeotropic distillation both with and without an entrainer. In particular the fluoroolefin can be 2,3,3,4,4,4-hexafluoro-1-butene (HFC-1336yf) and the entrainer 1,1,4,4,4-hexafluoro-2-butyne.

### SUMMARY OF THE INVENTION

This disclosure provides a composition consisting essentially of (a) HFO-1336yf; and (b) a second component; wherein said second component is a HFC-236ea or Z-HFO-1336mzz, and is present in an effective amount to form an azeotropic or azeotrope-like combination with the HFO-1336yf.

### BRIEF SUMMARY OF THE DRAWINGS

FIG. 1 - FIG. 1 is a graphical representation of an azeotropic composition of HFO-1336yf and HFC-236ea at a temperature of about 29.75°C.
FIG. 2 - FIG. 2 is a graphical representation of an azeotrope-like composition of HFO-1336yf and Z-HFO-1336mzz at a temperature of about 29.7°C.

### DETAILED DESCRIPTION OF THE INVENTION

It was found that some mixtures of HFO-1336yf and a second hydrofluorocarbon component do not contribute to the destruction of stratospheric ozone, while also having low global warming potentials. For example, mixtures having Z-HFO-1336mzz or HFC-236ea do not contribute to the destruction of stratospheric ozone and also have low global warming potentials (GWPs).

In many applications, the use of a pure single component or an azeotropic or azeotrope-like mixture is desirable. For example, when a blowing agent composition (also known as foam expansion agents or foam expansion compositions) is not a pure single component or an azeotropic or azeotrope-like mixture, the composition may change during its application in the foam forming process. Such change in composition could detrimentally affect processing or cause poor performance in the application. Also, in refrigeration applications, a refrigerant is often lost during operation through leaks in shaft seals, hose connections, soldered joints and broken lines. In addition, the refrigerant may be released to the atmosphere during maintenance procedures on refrigeration equipment. If the refrigerant is not a pure single component or an azeotropic or azeotrope-like composition, the refrigerant composition may change when leaked or discharged to the atmosphere from the refrigeration equipment. The change in refrigerant composition may cause the refrigerant to become flammable or to have poor refrigeration performance. Accordingly, there is a need for using azeotropic or azeotrope-like mixtures in these and other applications, for example azeotropic or azeotrope-like mixtures containing HFO-1336yf and HFC-236ea.

Before addressing details of embodiments described below, some terms are defined or clarified.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. In case of conflict, the present specification, including definitions, will control. Although methods and materials similar or equivalent to those described herein can be used in the practice or testing of embodiments of the present invention, suitable methods and materials are described below. In addition, the materials, methods, and examples are illustrative only and not intended to be limiting.

When an amount, concentration, or other value or parameter is given as either a range, preferred range or a list of upper preferable values and/or lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

HFO-1336yf is a known compound, and can be made through an addition reaction between CF₃CH₃ and CF₂=CF₂ using SbF₅ as a catalyst, followed by a dehydrofluorination reaction using Cr₂O₃ as a catalyst.

This application includes compositions consisting essentially of (a) HFO-1336yf; and (b) a second component; wherein said second component is HFC-236ea and is present in an effective amount to form an azeotropic or azeotrope-like combination with the HFO-1336yf.

By effective amount is meant an amount of HFC-236ea, which, when combined with HFO-1336yf, results in the formation of an azeotropic or azeotrope-like mixture. This definition includes the amounts of each component, which amounts may vary depending on the pressure applied to the composition so long as the azeotropic or azeotrope-like compositions continue to exist at the different pressures, but with possible different boiling points. Therefore, effective amount includes the amounts, such as may be expressed in weight or mole percentages, of each component of the compositions of the instant invention which form azeotropic or azeotrope-like compositions at temperatures or pressures other than as described herein.

As recognized in the art, an azeotropic composition is an admixture of two or more different components which, when in liquid form under a given pressure, will boil at a substantially constant temperature, which temperature may be higher or lower than the boiling temperatures of the individual components, and which will provide a vapor composition essentially identical to the overall liquid composition undergoing boiling. (see, e.g., M. F. Doherty and M.F. Malone, Conceptual Design of Distillation Systems, McGraw-Hill (New York), 2001, 185-186, 351-359).

Accordingly, the essential features of an azeotropic composition are that at a given pressure, the boiling point of the liquid composition is fixed and that the composition of the vapor above the boiling composition is essentially that of the overall boiling liquid composition (i.e., no fractionation of the components of the liquid composition takes place). It is also recognized in the art that both the boiling point and the weight percentages of each component of the azeotropic composition may change when the azeotropic composition is subjected to boiling at different pressures. Thus, an azeotropic composition may be defined in terms of the unique relationship that exists among the components or in terms of the compositional ranges of the components or in terms of exact weight percentages of each component of the composition characterized by a fixed boiling point at a specified pressure.

For the purpose of this invention, an azeotrope-like composition means a composition that behaves like an azeotropic composition (i.e., has constant boiling characteristics or a tendency not to fractionate upon boiling or evaporation). Hence, during boiling or evaporation, the vapor and liquid compositions, if they change at all, change only to a minimal or negligible extent. This is to be contrasted with non-azeotrope-like compositions in which during boiling or evaporation, the vapor and liquid compositions change to a substantial degree.

Additionally, azeotrope-like compositions exhibit dew point pressure and bubble point pressure with virtually no pressure differential. That is to say that the difference in the dew point pressure and bubble point pressure at a given temperature will be a small value. In this invention, compositions with a difference in dew point pressure and bubble point pressure of less than or equal to 5 percent (based upon the bubble point pressure) is considered to be azeotrope-like.

It is recognized in this field that when the relative volatility of a system approaches 1.0, the system is defined as forming an azeotropic or azeotrope-like composition. Relative volatility is the ratio of the volatility of component 1 to the volatility of component 2. The ratio of the mole fraction of a component in vapor to that in liquid is the volatility of the component.

To determine the relative volatility of any two compounds, a method known as the PTx method can be used. The vapor-liquid equilibrium (VLE), and hence relative volatility, can be determined either isothermally or isobarically. The isothermal method requires measurement of the total pressure of mixtures of known composition at constant temperature. In this procedure, the total absolute pressure in a cell of known volume is measured at a constant temperature for various compositions of the two compounds. The isobaric method requires measurement of the temperature of mixtures of known composition at constant pressure. In this procedure, the temperature in a cell of known volume is measured at a constant pressure for various compositions of the two compounds. Use of the PTx Method is described in detail in "Phase Equilibrium in Process Design", Wiley-Interscience Publisher, 1970, written by Harold R. Null, on pages 124 to 126.

These measurements can be converted into equilibrium vapor and liquid compositions in the PTx cell by using an activity coefficient equation model, such as the Non-Random, Two-Liquid (NRTL) equation, to represent liquid phase nonidealities. Use of an activity coefficient equation, such as the NRTL equation is described in detail in "The Properties of Gases and Liquids," 4th edition, published by McGraw Hill, written by Reid, Prausnitz and Poling, on pages 241 to 387, and in "Phase Equilibria in Chemical Engineering," published by Butterworth Publishers, 1985, written by Stanley M. Walas, pages 165 to 244. Without wishing to be bound by any theory or explanation, it is believed that the NRTL equation, together with the PTx cell data, can sufficiently predict the relative volatilities of the HFO-1336yf/HFC-236ea and HFO-1336yf/Z-HFO-1336mzz exemplary compositions of the present invention and can therefore predict the behavior of these mixtures in multi-stage separation equipment such as distillation columns.

### Example 1

It was found through experiments that HFO-1336yf and HFC-236ea form azeotropic or azeotrope-like compositions.

To determine the relative volatility of this binary pair, the PTx method described above was used. The pressure in a PTx cell of known volume was measured at constant temperature for various binary compositions. These measurements were then reduced to equilibrium vapor and liquid compositions in the cell using the NRTL equation.

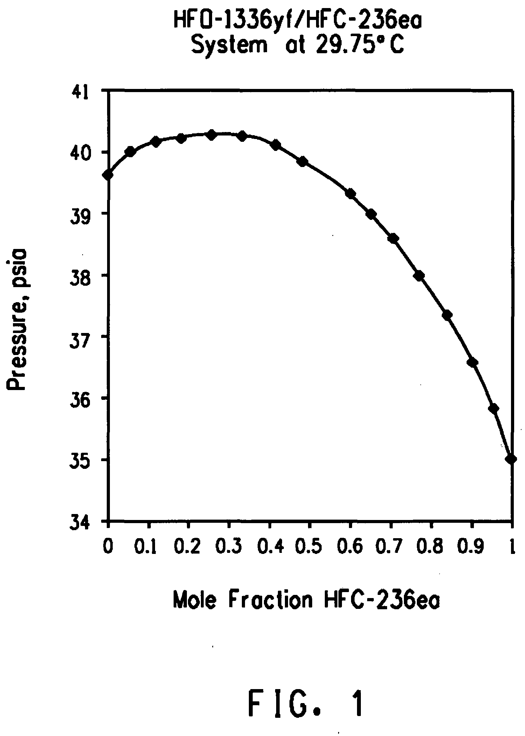

The pressures measured versus the compositions in the PTx cell for HFO-1336yf/HFC-236ea mixtures are shown in FIG. 1, which graphically illustrates the formation of an azeotropic composition consisting essentially of HFO-1336yf and HFC-236ea as indicated by a mixture of about 73.6 mole % HFO-1336yf and about 26.4 mole % HFC-236ea having the highest pressure over the range of compositions at about 29.75°C. Based upon these findings, it has been calculated that HFO-1336yf and HFC-236ea form azeotropic compositions ranging from about 50.9 mole percent to about 98.0 mole percent HFO-1336yf and from about 49.1 mole percent to about 2.0 mole percent HFC-236ea (which form azeotropic compositions boiling at a temperature of from about - 50°C to about 120°C and at a pressure of from about 1.1 psia (7.6 kPa) to about 362 psia (2496 kPa)). For example, at about 29.75°C and about 40.4 psia (278 kPa) the azeotropic composition consists essentially of about 73.6 mole % HFO-1336yf and about 26.4 mole % HFC-236ea. For another example, at about 1.3°C and about atmospheric pressure (14.7 psia, 101 kPa) the azeotropic composition consists essentially of about 81.9 mole % HFO-1336yf and about 18.1 mole % HFC-236ea. Some embodiments of azeotropic compositions are listed in Table 1.

**Table 1 Azeotropic compositions**

| **Azeotropic. Temperature (°C)** | **Azeotropic Pressure (psia)** | **HFO-1336yf (mole %)** | **HFC-236ea (mole %)** |
|---|---|---|---|
| -50 | 1.1 | 98.0 | 2.0 |
| -40 | 2.0 | 94.7 | 5.3 |
| -30 | 3.5 | 91.5 | 8.5 |
| -20 | 5.8 | 88.4 | 11.6 |
| -10 | 9.2 | 85.3 | 14.7 |
| 0 | 14.0 | 82.3 | 17.7 |
| 10 | 20.5 | 79.3 | 20.7 |
| 20 | 29.3 | 76.4 | 23.6 |
| 29.75 | 40.4 | 73.6 | 26.4 |
| 30 | 40.8 | 73.5 | 26.5 |
| 40 | 55.4 | 70.6 | 29.4 |
| 50 | 73.6 | 67.8 | 32.2 |
| 60 | 96.1 | 65.0 | 35.0 |
| 70 | 123.4 | 62.2 | 37.8 |
| 80 | 156.3 | 59.5 | 40.5 |
| 90 | 195.5 | 56.8 | 43.2 |
| 100 | 241.9 | 54.3 | 45.7 |
| 110 | 296.8 | 52.0 | 48.0 |
| 120 | 362.4 | 50.9 | 49.1 |

Additionally, azeotrope-like compositions containing HFO-1336yf and HFC-236ea may also be formed. In some embodiments of this invention, an azeotrope-like composition consists essentially of 1-99 mole % HFO-1336yf and 99-1 mole % HFC-236ea at a temperature ranging from about -40°C to about 120°C (i.e., over this temperature range, the difference in dew point pressure and bubble point pressure of the composition at a particular temperature is less than or equal to 5 percent (based upon the bubble point pressure)). In some embodiments of this invention, an azeotrope-like composition consists essentially of 5-95 mole % HFO-1336yf and 95-5 mole % HFC-236ea at a temperature ranging from about -40°C to about 120°C (i.e., over this temperature range, the difference in dew point pressure and bubble point pressure of the composition at a particular temperature is less than or equal to 5 percent (based upon the bubble point pressure)).

Such azeotrope-like compositions exist around azeotropic compositions. Some embodiments of azeotrope-like compositions are listed in Table 2. Additional embodiments of azeotrope-like compositions are listed in Table 3.

**Table 2 Azeotrope-like compositions**

| **Components** | **T (°C)** | **Mole Percentage Range** |
|---|---|---|
| HFO-1336yf/HFC-236ea | -40 | 1 - 64/99 - 36 and 88 - 99 / 12 - 1 |
| HFO-1336yfIHFC-236ea | -20 | 1 - 99 / 99 - 1 |
| HFO-1336yf/HFC-236ea | 0 | 1 - 99 / 99 - 1 |
| HFO-1336yf/HFC-236ea | 20 | 1 - 99 / 99 - 1 |
| HFO-1336yf/HFC-236ea | 40 | 1 - 99 / 99 - 1 |
| HFO-1336yf/HFC-236ea | 60 | 1 - 99 / 99 - 1 |
| HFO-1336yf/HFC-236ea | 80 | 1 - 99 / 99 - 1 |
| HFO-1336yf/HFC-236ea | 100 | 1 - 99 / 99 - 1 |
| HFO-1336yf/HFC-236ea | 120 | 1 - 99 / 99 - 1 |

**Table 3 Azeotrope-like compositions**

| **Components** | **T**(**°C**) | **Mole Percentage Range** |
|---|---|---|
| HFO-1336yf/HFC-236ea | -40 | 5 - 64/95 - 36 and 88 - 95 / 12 - 5 |
| HFO-1336yf/HFC-236ea | -20 | 5-95 / 95-5 |
| HFO-1336yf/HFC-236ea | 0 | 5 - 95 / 95 - 5 |
| HFO-1336yf/HFC-236ea | 20 | 5 - 95 / 95 - 5 |
| HFO-1336yf/HFC-236ea | 40 | 5 - 95 / 95 - 5 |
| HFO-1336yf/HFC-236ea | 60 | 5 - 95 / 95 - 5 |
| HFO-1336yf/HFC-236ea | 80 | 5 - 95 / 95 - 5 |
| HFO-1336yf/HFC-236ea | 100 | 5 - 95 / 95 - 5 |
| HFO-1336yf/HFC-236ea | 120 | 5 - 95 / 95 - 5 |

The azeotropic or azeotrope-like compositions of the present invention can be prepared by any convenient method including mixing or combining the desired amounts. In one embodiment of this invention, an azeotropic or azeotrope-like composition can be prepared by weighing the desired component amounts and thereafter combining them in an appropriate container.

The azeotropic or azeotrope-like compositions of the present invention can be used in a wide range of applications, including their use as aerosol propellants, refrigerants, solvents, cleaning agents, blowing agents (foam expansion agents) for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents.

One embodiment of this invention provides a process for preparing a thermoplastic or thermoset foam. The process comprises using an azeotropic or azeotrope-like composition as a blowing agent, wherein said azeotropic or azeotrope-like composition consists essentially of HFO-1336yf and HFC-236ea.

Another embodiment of this invention provides a process for producing refrigeration. The process comprises condensing an azeotropic or azeotrope-like composition and thereafter evaporating said azeotropic or azeotrope-like composition in the vicinity of the body to be cooled, wherein said azeotropic or azeotrope-like composition consists essentially of HFO-1336yf and HFC-236ea.

Another embodiment of this invention provides a process using an azeotropic or azeotrope-like composition as a solvent, wherein said azeotropic or azeotrope-like composition consists essentially of HFO-1336yf and HFC-236ea.

Another embodiment of this invention provides a process for producing an aerosol product. The process comprises using an azeotropic or azeotrope-like composition as a propellant, wherein said azeotropic or azeotrope-like composition consists essentially of HFO-1336yf and HFC-236ea.

Another embodiment of this invention provides a process using an azeotropic or azeotrope-like composition as a heat transfer media, wherein said azeotropic or azeotrope-like composition consists essentially of HFO-1336yf and HFC-236ea.

Another embodiment of this invention provides a process for extinguishing or suppressing a fire. The process comprises using an azeotropic or azeotrope-like composition as a fire extinguishing or suppression agent, wherein said azeotropic or azeotrope-like composition consists essentially of HFO-1336yf and HFC-236ea.

Another embodiment of this invention provides a process using an azeotropic or azeotrope-like composition as dielectrics, wherein said azeotropic or azeotrope-like composition consists essentially of HFO-1336yf and HFC-236ea.

### Example 2

It was found through experiments that HFO-1336yf and Z-HFO-1336mzz form azeotrope-like compositions.

To determine the relative volatility of this binary pair, the PTx method described above was used. The pressure in a PTx cell of known volume was measured at constant temperature for various binary compositions. These measurements were then reduced to equilibrium vapor and liquid compositions in the cell using the NRTL equation.

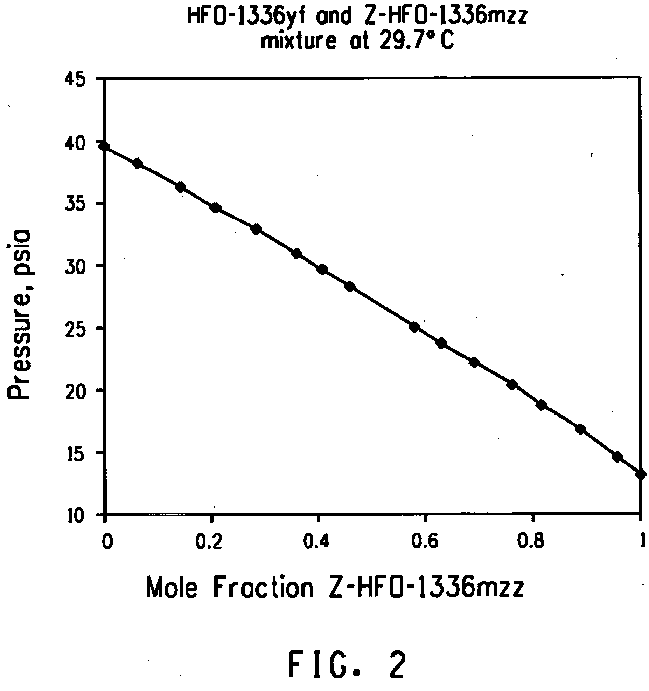

The pressures measured versus the compositions in the PTx cell for HFO-1336yf/Z-HFO-1336mzz mixtures are shown in FIG. 2, which graphically illustrates the formation of azeotrope-like compositions consisting essentially of 99-94 mole % HFO-1336yf and 1-6 mole % Z-HFO-1336mzz at about 29.7°C and pressures ranging from about 36 to about 40 psia, and also graphically illustrates the formation of azeotrope-like compositions consisting essentially of 3-1 mole % HFO-1336yf and 97-99 mole % Z-HFO-1336mzz at about 29.7°C and pressures ranging from about 13 to about 14 psia.

According to calculation, azeotrope-like compositions consisting essentially of 99-75 mole % HFO-1336yf and 1-25 mole % Z-HFO-1336mzz are formed at temperatures ranging from about -40°C to about 120°C (i.e., over this temperature range, the difference in dew point pressure and bubble point pressure of the composition at a particular temperature is less than or equal to 5 percent (based upon the bubble point pressure)). In addition, azeotrope-like compositions consisting essentially of 14-1 mole % HFO-1336yf and 86-99 mole % Z-HFO-1336mzz are formed at temperatures ranging from about -40°C to about 120°C (i.e., over this temperature range, the difference in dew point pressure and bubble point pressure of the composition at a particular temperature is less than or equal to 5 percent (based upon the bubble point pressure)).

Some embodiments of azeotrope-like compositions are listed in Table 1a.

**Table 1a Azeotrope-like compositions**

| **Components** | **T (°C)** | **Mole Percentage Range** |
|---|---|---|
| HFO-1336yf/Z-HFO-1336mzz | -40 | 99 - 98/1 - 2 and 2 - 1/98 - 99 |
| HFO-1336yf/Z-HFO-1336mzz | -20 | 99 - 97/1 - 3 and 2-1/98-99 |
| HFO-1336yf/Z-HFO-1336mzz | 0 | 99 - 96/1 - 4 and 2 - 1/98 - 99 |
| HFO-1336yf/Z-HFO-1336mzz | 20 | 99 - 95/1 - 5 and 3 - 1/97 - 99 |
| HFO-1336yf/Z-HFO-1336mzz | 40 | 99 - 93/1 - 7 and 4 - 1/96 - 99 |
| HFO-1336yf/Z-HFO-1336mzz | 60 | 99 - 91/1 - 9 and 5 - 1/95 - 99 |
| HFO-1336yf/Z-HFO-1336mzz | 80 | 99 - 88/1 - 12 and 7 - 1/93 - 99 |
| HFO-1336yf/Z-HFO-1336mzz | 100 | 99 - 83/1 - 17 and 10 - 1/90 - 99 |
| HFO-1336yf/Z-HFO-1336mzz | 120 | 99 - 75/1 - 25 and 14 - 1/86 - 99 |

The azeotrope-like compositions of the present invention can be prepared by any convenient method including mixing or combining the desired amounts. In one embodiment of this invention, an azeotrope-like composition can be prepared by weighing the desired component amounts and thereafter combining them in an appropriate container.

The azeotrope-like compositions of the present invention can be used in a wide range of applications, including their use as aerosol propellants, refrigerants, solvents, cleaning agents, blowing agents (foam expansion agents) for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents.

One embodiment of this invention provides a process for preparing a thermoplastic or thermoset foam. The process comprises using an azeotrope-like composition as a blowing agent, wherein said azeotrope-like composition consists essentially of HFO-1336yf and Z-HFO-1336mzz.

Another embodiment of this invention provides a process for producing refrigeration. The process comprises condensing an azeotrope-like composition and thereafter evaporating said azeotrope-like composition in the vicinity of the body to be cooled, wherein said azeotrope-like composition consists essentially of HFO-1336yf and Z-HFO-1336mzz.

Another embodiment of this invention provides a process using an azeotrope-like composition as a solvent, wherein said azeotrope-like composition consists essentially of HFO-1336yf and Z-HFO-1336mzz.

Another embodiment of this invention provides a process for producing an aerosol product. The process comprises using an azeotrope-like composition as a propellant, wherein said azeotrope-like composition consists essentially of HFO-1336yf and Z-HFO-1336mzz.

Another embodiment of this invention provides a process using an azeotrope-like composition as a heat transfer media, wherein said azeotrope-like composition consists essentially of HFO-1336yf and Z-HFO-1336mzz.

Another embodiment of this invention provides a process for extinguishing or suppressing a fire. The process comprises using an azeotrope-like composition as a fire extinguishing or suppression agent, wherein said azeotrope-like composition consists essentially of HFO-1336yf and Z-HFO-1336mzz.

Another embodiment of this invention provides a process using an azeotrope-like composition as dielectrics, wherein said azeotrope-like composition consists essentially of HFO-1336yf and Z-HFO-1336mzz.

## Claims

1. A composition consisting essentially of:
(a) 2,3,3,4,4,4-hexafluoro-1-butene; and
(b) a second component; wherein said second component is (i) 1,1,1,2,3,3-hexafluoropropane or (ii) 1,1,1,4,4,4-hexafluoro-2-butene, and wherein said second component is present in an effective amount to form an azeotrope-like combination with the 2,3,3,4,4,4-hexafluoro-1-butene.

2. The composition of claim 1, consisting essentially of:
(a) 2,3,3,4,4,4-hexafluoro-1-butene; and
(b) 1,1,1,2,3,3-hexafluoropropane; wherein said 1,1,1,2,3,3-hexafluoropropane is present in an effective amount to form an azeotropic combination with the 2,3,3,4,4,4-hexafluoro-1-butene.

3. The composition of claim 2, wherein the composition consists essentially of 50.9 mole percent to 98.0 mole percent HFO-1336yf and from 49.1 mole percent to 2.0 mole percent HFC-236ea (at a temperature of from - 50°C to 120°C and at a pressure of from 1.1 psia (7.6 kPa) to 362 psia (2496 kPa)).

4. The composition of claim 1 wherein the composition consists essentially of (i) 1-99 mole % HFO-1336yf and 99-1 mole % HFC-236ea at temperatures ranging from -40°C to 120°C; (ii), 99-75 mole % HFO-1336yf and 1-25 mole % Z-HFO-1336mzz at temperatures ranging from -40°C to 120°C ; or (iii) 14-1 mole % HFO-1336yf and 86-99 mole % Z-HFO-1336mzz at temperatures ranging from -40°C to 120°C.

5. A process for preparing a thermoplastic or thermoset foam comprising using the azeotrope or azeotrope-like composition of Claims 1,2,3, or 4 as a blowing agent.

6. A process for producing refrigeration comprising condensing the azeotrope or azeotrope-like composition of Claims 1, 2, 3, or 4 and thereafter evaporating said azeotropic composition in the vicinity of the body to be cooled.

7. A process comprising using the azeotrope or azeotrope-like composition of Claims 1, 2, 3, or 4 as a solvent.

8. A process for producing an aerosol product comprising using the azeotrope or azeotrope-like composition of Claims 1, 2, 3, or 4 as a propellant.

9. A process comprising using the azeotrope or azeotrope-like composition of Claims 1, 2, 3, or 4 as a heat transfer media.

10. A process for extinguishing or suppressing a fire comprising using the azeotrope or azeotrope-like composition of Claims 1, 2, 3, or 4 as a fire extinguishing or suppression agent.

11. A process comprising using the azeotrope or azeotrope-like composition of Claims 1, 2, 3, or 4 as dielectrics.

## Patentansprüche

1. Zusammensetzung, im Wesentlichen bestehend aus:
(a) 2,3,3,4,4,4-Hexafluor-1-Buten; und
(b) einem zweiten Bestandteil; wobei der zweite Bestandteil Folgendes ist: (i) 1,1,1,2,3,3-Hexafluorpropan oder (ii) 1,1,1,4,4,4-Hexafluor-2-Buten und wobei der zweite Bestandteil in einer wirksamen Menge vorhanden ist, um eine azeotropähnliche Kombination mit dem 2,3,3,4,4,4-Hexafluor-1-Buten zu bilden.

2. Zusammensetzung nach Anspruch 1, im Wesentlichen bestehend aus:
(a) 2,3,3,4,4,4-Hexafluor-1-Buten; und
(b) 1,1,1,2,3,3-Hexafluorpropan; wobei das 1,1,1,2,3,3-Hexafluorpropan in einer wirksamen Menge vorhanden ist, um eine azeotrope Kombination mit dem 2,3,3,4,4,4-Hexafluor-1-Buten zu bilden.

3. Zusammensetzung nach Anspruch 2, wobei die Zusammensetzung im Wesentlichen aus 50,9 Mol-% bis 98,0 Mol-% HFO-1336yf und 49,1 Mol-% bis 2,0 Mol-% HFC-236ea (bei einer Temperatur von -50°C bis 120°C und einem Druck von 1,1 psia (7,6 kPa) bis 362 psia (2496 kPa)) besteht.

4. Zusammensetzung nach Anspruch 1, wobei die Zusammensetzung im Wesentlichen aus (i) 1-99 Mol-% HFO-1336yf und 99-1 Mol-% HFC-236ea bei Temperaturen im Bereich von -40°C bis 120°C; (ii) 99-75 Mol-% HFO-1336yf und 1-25 Mol-% Z-HFO-1336mzz bei Temperaturen im Bereich von -40°C bis 120°C oder (iii) 14-1 Mol-% HFO-1336yf und 86-99 Mol-% Z-HFO-1336mzz bei Temperaturen im Bereich von -40°C bis 120°C besteht.

5. Verfahren zur Herstellung eines thermo- oder duroplastischen Schaums, umfassend die Verwendung der azeotropen oder azeotropähnlichen Zusammensetzung nach den Ansprüchen 1, 2, 3 oder 4 als Blähmittel.

6. Kühlverfahren umfassend das Kondensieren der azeotropen oder azeotropähnlichen Zusammensetzung nach den Ansprüchen 1, 2, 3 oder 4 und das anschließende Evaporieren der azeotropen Zusammensetzung in der Nähe des zu kühlenden Körpers.

7. Verfahren, umfassend die Verwendung der azeotropen oder azeotropähnlichen Zusammensetzung nach den Ansprüchen 1, 2, 3 oder 4 als Lösungsmittel.

8. Verfahren zur Herstellung eines Areosolprodukts, umfassend die Verwendung der azeotropen oder azeotropähnlichen Zusammensetzung nach den Ansprüchen 1, 2, 3 oder 4 als Treibmittel.

9. Verfahren, umfassend die Verwendung der azeotropen oder azeotropähnlichen Zusammensetzung nach den Ansprüchen 1, 2, 3 oder 4 als Wärmeübertragungsmedium.

10. Verfahren zum Löschen oder Unterdrücken eines Feuers, umfassend die Verwendung der azeotropen oder azeotropähnlichen Zusammensetzung nach den Ansprüchen 1, 2, 3 oder 4 als Feuerlösch- oder Feuerunterdrückungsmittel.

11. Verfahren, umfassend die Verwendung der azeotropen oder azeotropähnlichen Zusammensetzung nach den Ansprüchen 1, 2, 3 oder 4 als Dielektrikum.

## Revendications

1. Composition consistant essentiellement en:
(a) 2,3,3,4,4,4-hexafluoro-1-butène; et
(b) un deuxième composant, dans laquelle le deuxième composant est (i) du 1,1,1,2,3,3-hexafluoropropane ou (ii) du 1,1,1,4,4,4-hexafluoro-2-butène, et dans laquelle ledit deuxième composant est présent en une quantité effective pour former une combinaison du type azéotrope avec le 2,3,3,4,4,4-hexafluoro-1-butène.

2. Composition selon la revendication 1, consistant essentiellement en:
(a) 2,3,3,4,4,4-hexafluoro-1-butène; et
(b) 1,1,1,2,3,3-hexafluoropropane; dans laquelle ledit 1,1,1,2,3,3-hexafluoropropane est présent en une quantité effective pour former une combinaison azéotrope avec le 2,3,3,4,4,4-hexafluoro-1-butène.

3. Composition selon la revendication 2, dans laquelle la composition consiste essentiellement en 50,9 % en moles à 98,0 % en moles de HFO-1336yf et de 49,1 % en moles à 2,0 % en moles de HFC-236ea (à une température située dans la plage allant de -50°C à 120°C et une pression allant de 1,1 psia (7,6 kPa) à 362 psia (2496 kPa)).

4. Composition selon la revendication 1, dans laquelle la composition consiste essentiellement en (i) 1-99 % en moles de HFO-1336yf et 99-1 % en moles de HFC-236ea à des températures allant de -40°C à 120°C; (ii) 99-75 % en moles de HFO-1336yf et 1-25 % en moles de Z-HFO-1336mzz à des températures allant de -40°C à 120°C; ou (iii) 14-1 % en moles de HFO-1336yf et 86-99 % en moles de Z-HFO-1336mzz à des températures allant de -40°C à 120°C.

5. Procédé de préparation d'une mousse thermoplastique ou thermodurcissable en utilisant la composition azéotrope ou de type azéotrope selon les revendications 1, 2, 3 ou 4 en tant qu'agent gonflant.

6. Procédé de production de réfrigération comprenant la condensation de la composition azéotrope ou de type azéotrope selon les revendications 1, 2, 3 ou 4 et l'évaporation subséquente de ladite composition azéotrope à proximité du corps à refroidir.

7. Procédé comprenant l'utilisation de la composition azéotrope ou de type azéotrope selon les revendications 1, 2, 3 ou 4 en tant que solvant.

8. Procédé de production d'un produit d'aérosol comprenant l'utilisation de la composition azéotrope ou de type azéotrope selon les revendications 1, 2, 3 ou 4 en tant qu'agent propulseur.

9. Procédé comprenant l'utilisation de la composition azéotrope ou de type azéotrope selon les revendications 1, 2, 3 ou 4 en tant que milieu de transfert de chaleur.

10. Procédé d'extinction ou de suppression de feu comprenant l'utilisation de la composition azéotrope ou de type azéotrope selon les revendications 1, 2, 3 ou 4 en tant qu'agent d'extinction ou de suppression de feu.

11. Procédé comprenant l'utilisation de la composition azéotrope ou de type azéotrope selon les revendications 1, 2, 3 ou 4 en tant que diélectrique.
